Europäisches Patentamt

European Patent Office

Office européen des brevets

(11) Veröffentlichungsnummer: **0 497 114 B1**

# EUROPÄISCHE PATENTSCHRIFT

(45) Veröffentlichungstag der Patentschrift: **11.01.95**

(51) Int. Cl.6: **C02F 3/12**

(21) Anmeldenummer: **92100359.6**

(22) Anmeldetag: **10.01.92**

(54) **Verfahren zum Reinigen von Phosphate und Stickstoffverbindungen enthaltende Abwässern.**

(30) Priorität: **11.01.91 DE 4100685**

(43) Veröffentlichungstag der Anmeldung:
**05.08.92 Patentblatt 92/32**

(45) Bekanntmachung des Hinweises auf die
Patenterteilung:
**11.01.95 Patentblatt 95/02**

(84) Benannte Vertragsstaaten:
**AT BE CH DE FR GB IT LI LU NL**

(56) Entgegenhaltungen:
**EP-A- 0 220 142**
**EP-A- 0 396 142**
**DE-A- 3 716 782**
**FR-A- 2 369 999**

(73) Patentinhaber: **SÜD-CHEMIE AG**
**Lenbachplatz 6**
**D-80333 München (DE)**

(72) Erfinder: **Huber, Anton**
**Margarethenried 6b**
**W-8051 Hörgertshausen (DE)**

(74) Vertreter: **Patentanwälte Dipl.-Ing. R. Splane-**
**mann Dr. B. Reitzner Dipl.-Ing. K. Baronetzky**
**Tal 13**
**D-80331 München (DE)**

## Beschreibung

Die Erfindung betrifft ein Verfahren zum Reinigen von Phosphate und Stickstoffverbindungen enthaltenden Abwässern.

Die üblichen Verfahren zur Reinigung von Phosphate und Stickstoffverbindungen (Ammoniumverbindungen, Nitrate, Nitrite, organische Stickstoffverbindungen) enthaltenden Abwässern werden gewöhnlich in drei Stufen durchgeführt.

In der ersten Stufe werden die Abwässer in einem Vorklärbecken behandelt. Hierdurch werden der chemische Sauerstoffbedarf (CSB, ausgedrückt in mg $O_2$/l) und der biologische Sauerstoffbedarf ($BSB_5$, ausgedrückt im mg $O_2$/l nach 5 Tagen) um etwa 20 % herabgesetzt. Es fällt ein Klärschlamm an, der gegebenenfalls nach dem Ausfaulen in Faultürmen (Erzeugung von Biogas) landwirtschaftlich genutzt werden kann, wenn er keine zu hohen Schadstoffbelastungen (Schwermetalle, Phenole, Chlorkohlenwasserstoffe) aufweist. Ansonsten muß er deponiert oder verbrannt werden.

In der zweiten Stufe werden die vorgereinigten, noch Phosphate und Stickstoffverbindungen in Form von Ammoniumverbindungen enthaltenden Abwässer in ein Belebungsbecken geleitet, und zwar zusammen mit belebtem Rücklaufschlamm aus einem Nachklärbecken sowie zusammen mit nitrathaltigem Rücklaufwasser aus dem Ablauf des Belebungsbeckens. Im ersten, anoxischen Bereich des Belebungsbeckens wird zunächst der Nitratgehalt des Rücklaufwassers durch Denitrifikation in molekularen Stickstoff und Distickstoffoxid ($N_2O$) umgewandelt. Unter "anoxisch" versteht man, daß die Abwässer keinen Sauerstoff, aber noch Nitrat und Nitrit enthalten. Die Mikroorganismen, die für die Denitrifikation verantwortlich sind (Denitrifikanten) decken ihren Nährstoffbedarf durch das zulaufende Abwasser und den Rücklaufschlamm. Nach der Denitrifikation gelangt das Abwasser zunächst in den aeroben Bereich des Belebungsbeckens, in welchem der Ammoniumstickstoff unter Luftzufuhr durch nitrifizierende Mikroorganismen (Nitrifikanten) in Nitratstickstoff umgewandelt wird. Durch die Tätigkeit der Nitrifikanten wird zusätzlich neuer Belebtschlamm gebildet. Parallel dazu erfolgt der mikrobielle Abbau der organischen Fracht unter Bildung von $CO_2$ und $H_2O$. Der größte Teil des nitrathaltigen Abwassers (etwa 300 bis 400 % des Zulaufs) wird als Rücklaufwasser in den ersten anoxischen Bereich des Belebungsbeckens zurückgeleitet. Die Restmenge des nitrathaltigen Abwassers ($NH_4^+$-Stickstoff < 10 mg/l; Gesamtstickstoffgehalt < 18 mg/l) wird in der dritten Stufe zusammen mit dem Belebtschlamm in ein Nachklärbecken geleitet, in welchem der Belebtschlamm abgeschieden wird. Das geklärte Abwasser wird in den Vorfluter geleitet. Der abgeschiedene Belebtschlamm wird teilweise als Rücklaufschlamm in den ersten anoxischen Bereich des Belebungsbeckens zurückgeleitet, zum Teil als Überschußschlamm abgeleitet und, gegebenenfalls nach dem Ausfaulen in Faultürmen, für landwirtschaftliche Zwecke genutzt bzw. deponiert oder verbrannt. Zur Einhaltung der Phosphatgrenzwerte kann man am Zulauf des Nachklärbeckens eine Lösung von Salzen mehrwertiger Metalle zudosieren, wobei die Phosphate ausgefällt werden.

Bei den bekannten Verfahren bereitet insbesondere die Durchführung der zweiten Stufe Schwierigkeiten, da die einzelnen Bereiche des Belebungsbeckens nicht scharf voneinander getrennt sind, so daß eine genaue Kontrolle des Reinigungsprozesses nicht möglich ist. Weiterhin muß das nitrathaltige Rücklaufwasser aus dem aeroben Bereich am Ende des Belebungsbeckens in den anoxischen Bereich am Eingang des Belebungsbeckens zurückgepumpt werden, was mit hohem Energiebedarf und häufig mit Schwierigkeiten verbunden ist, da das nitrathaltige Rücklaufwasser gewöhnlich mit Belebtschlamm belastet ist. Gerade auf bestehenden Kläranlagen können Platzprobleme die Integration einer zusätzlichen Nitrifikations- und Denitrifikationsstufe verhindern.

Aus der DE-A-39 17 451 ist ein Verfahren zur biologischen Reinigung von kontaminierten Abwässern bekannt, wonach stickstoffhaltige Abwässer einem belüfteten Reaktor zugeführt werden, in welchem auch gereinigtes Abwasser und Schlamm als Rezirkulat zurückgeführt wird und die Hauptmenge der organischen Verunreinigungen in Biomasse umgewandelt wird, worauf dieses Gemisch als Ablauf in einen unbelüfteten, anoxisch arbeitenden Reaktor eingeleitet wird und in diesem mit nitrit- und nitrathaltigem Rezirkulat vermischt wird, wobei eine Symproportionierung des $NH_4$-haltigen Ablaufes erfolgt. Der Ablauf wird nitrifiziert, und es erfolgt ein biochemischer Abbau der organischen Restsubstanz. Ein nitrifiziertes Rezirkulat wird zurückgeführt, und der Ablauf wird zur Rückführung entnommen. Eine Teilmenge der gebildeten Biomasse wird zurückgeführt, und die andere Teilmenge wird entwässert, während das gereinigte Abwasser zurückgeführt wird.

Aus der DE-A-38 13 386 ist ein Verfahren und eine Vorrichtung zur biologischen Stickstoffentfernung aus Abwasser bekannt, wobei das Abwasser nacheinander drei Behandlungsstufen zugeführt wird, die alle mit Trägermaterial als Aufwuchsfläche für Biomasse ausgestattet sind. In der ersten Behandlungsstufe folgt eine Denitrifikation des Abwassers unter anoxischen Bedingungen. Die beiden anderen Behandlungsstufen werden aerob betrieben und dienen zur Nitrifikation. Ein Teil des in der zweiten Behandlungsstufe behandelten Abwassers wird zur ersten Behandlungsstufe zurückgeleitet.

Aus der DE-C-36 02 944 ist ein Verfahren für die Reinigung von schwer abbaubare Substanzen führendem Abwasser bekannt, wonach die Reinigung in einer Abwasserreinigungsanlage mit Adsorptionsstufe und über eine Zwischenklärung mit Schlammabzug und Einrichtung zur Schlammrückführung nachgeschalteter aerober Belebungsstufe, die von dem Abwasser durchströmt wird, erfolgt. In der Adsorptionsstufe erfolgt ein bakterieller, anaerober Abbauprozess, wobei zwischen den Adsorptions-Teilstufen eine aerobe Behandlung durchgeführt wird.

Aus der DE-A-35 07 388 ist ein Verfahren für die Reinigung von Abwasser bekannt, wonach das zu reinigende Abwasser zunächst in eine als Adsorptionsstufe betriebene Hochlast-Belebungsstufe, danach über eine Zwischenklärstufe mit Schlammabzug sowie im Anschluß daran in eine Schwachlaststufe eingeführt wird, an die sich eine Nachklärstufe mit Schlammabzug anschließt. In der Adsorptionsstufe arbeiten Mikroorganismen. Der Schlamm wird mit Hilfe des Schlammabzuges aus der Zwischenklärstufe in der Einarbeitungsphase gehalten. In der Schwachlaststufe können auch eine Nitrifikation sowie im Anschluß daran eine Denitrifikation durchgeführt werden. Schlamm aus der Zwischenklärstufe kann als Rückführschlamm in die Adsorptionsstufe, Schlamm aus der Nachklärstufe als Rückführschlamm in die Schwachlaststufe eingeführt werden. Der Überschußschlamm wird abgezogen und eingedickt.

Aus der DE-A-16 42 399 ist ein Verfahren zur Herabsetzung des Phosphorgehaltes von Abwasser bekannt, wonach zunächst ein Phosphor-Fällungsmittel zugesetzt wird, worauf das restliche Abwasser in Gegenwart von phosphorverzehrenden biologischen Mitteln belüftet wird.

Aus der WO 90/10 600 ist ein Verfahren zur biologischen Phosphatentfernung aus Wasser bekannt, wobei dem Abwasser in einer Belüftungsstufe durch Beimischen von Belebtschlamm Phosphat entzogen wird, das Phosphat in den Mikroorganismen des Belebtschlammes angereichert, der phosphatreiche Belebtschlamm anschließend schließend abgetrennt und anaerob dephosphatiert wird. Die Dephosphatierungsstufe weist eine Kontaktrücklösestufe und getrennt davon eine Sedimentationsstufe auf, wobei in der Kontaktrücklösestufe in anoxischer Umgebung eine Denitrifikation bewirkt wird, wobei das gespeicherte Phosphat in das Wasser abgegeben wird. In der anaeroben Sedimentationsstufe wird der phosphatarme Schlamm vom phosphathaltigen Wasser getrennt.

Der Aufsatz von Brendl, H.G. und Mettke, V. in "wlb - wasser, luft und betrieb", 10/88 Seiten 19-21, beschreibt ein Verfahren zur geregelten Dosierung von Fällungsmitteln zur Phosphatelimination. Als Fällungsmittel werden Eisen-und Aluminiumsalze verwendet, wobei die Phosphatkonzentration vor der Zudosierung der Fällungsmittel gemessen wird.

Die EP-A-0 396 142 betrifft ein Verfahren und eine Vorrichtung zur Steuerung biologischer Prozesse zur Phosphor- und Stickstoffeliminierung in Belebtschlammanlagen. Hierbei wird das Abwasser zunächst in einem Vorklärbecken mechanisch vorgeklärt. Das Vorklärbecken ist in mehrere, mindestens 3 voneinander getrennte Beckenbereiche aufgeteilt, d.h. es liegt eine sehr aufwendige Kostruktion mit einem großen Raumbedarf vor.

Daran schließt sich ein Beckenblock an, welcher aus den anoxischen Stufen I und III, der anaeroben Stufe 2, zwei Steuerstufen 4.1 und 4.2 und der aeroben Stufe 5 beteht.

Das bekannte Verfahren wird also nicht nur durch das Vorklärbecken, sondern auch durch die Steuerstufen 4.1. und 4.2. aufwendig und kompliziert.

Der Erfindung liegt die Aufgabe zugrunde, ein Verfahren zur Reinigung von Phosphate und Stickstoffverbindungen enthaltenden Abwässern bereitzustellen nach welchem insbesondere die im Belebungsbecken auftretenden Schwierigkeiten behoben werden können.

Das erfindungsgemäße Verfahren ist dadurch gekennzeichnet, daß man

(1) das Abwasser in einem Vorklärbecken durch Zugabe einer Lösung von Salzen mehrwertiger Metalle zunächst chemisch vorklärt, bis das Verhältnis zwischen biologischem Sauerstoffbedarf ($BSB_5$) und Gesamtstickstoff weniger als 4,5 beträgt;

(2) das vorgeklärte Abwasser in einem anaeroben Bereich des ersten Teils eines zweiteiligen Belebungsbeckens, in einem anaeroben Zwischenbecken oder in einem anaeroben Bereich des Vorklärbeckens zusammen mit belebtem Rücklaufschlamm aus einer Fest-Flüssig Trenneinrichtung einer biologischen Phosphatfreisetzung unterzieht;

(3) eine Mischung aus dem aus Stufe (2) erhaltenen Abwasser und nitrathaltigem Rücklaufwasser mit Belebtschlamm, die durch eine Öffnung in der Trennwand zwischen den beiden Teilen des Belebungsbeckens direkt aus dem zweiten aeroben Teil des Belebungsbeckens gepumpt werden, in einem an den anaeroben Bereich anschließenden anoxischen Bereich des Belebungsbeckens einer Denitrifikation unterzieht;

(4) die denitrifizierte Schlamm-Abwasser-Mischung in einem getrennten aeroben Bereich im ersten Teil des Belebungsbeckens einer Nitrifikation und einem Abbau der organischen Fracht unterzieht;

(5) die nitrathaltige Schlamm-Abwasser-Mischung unmittelbar in den zweiten, aeroben Teil des Belebungsbeckens leitet und dort die Nitrifikation und den Abbau der organischen Fracht weiterführt;

(6) einen größeren Teil des erhaltenen nitrathaltigen Abwassers mit Belebtschlamm durch eine Öffnung in der Trennwand zwischen den beiden Teilen des Belebungsbeckens als Rücklaufwasser in den anoxischen Bereich des ersten Belebungsbeckens zurückpumpt und einen kleineren Teil des Abwassers zusammen mit Belebtschlamm in eine Fest-Flüssig-Trenneinrichtung leitet; und

(7) in den Zulauf der Fest-Flüssig-Trenneinrichtung eine Lösung von Salzen mehrwertiger Metalle zur Phosphatfällung einspeist und den ausgeflockten Schlamm von geklärten Abwasser abtrennt.

Die Stufe (1) ist für das Gesamtverfahren wichtig, um die Schlammbelastung im Belebungsbekken möglichst niedrig zu halten. Auf diese Weise werden die sehr hohen Kosten für den Bau von großen Belebungsbecken herabgesetzt bzw. es können bereits vorhandene Belebungsbecken mit größeren Abwassermengen beaufschlagt werden.

Die Schlammbelastung im Belebungsbecken kann wie folgt berechnet werden:

$$B_{TS} = \frac{BSB_5 \times Q_{TW}}{V_{BB} \times TS_{BB}} \ (d^{-1}),$$

wobei $B_{TS}$ die Schlammbelastung im Belebungsbecken, $BSB_5$ den biologischen Sauerstoffbedarf (mg $O_2$/l), $Q_{TW}$ die Abwassermenge (m³/d), $V_{BB}$ das Volumen des Belebungsbeckens (m³) und $TS_{BB}$ den Feststoffgehalt im Belebungsbecken (mg/l) bedeuten.

Der $B_{TS}$-Wert soll kleiner als 0,15 d⁻¹, vorzugsweise kleiner als 0,1 d⁻¹ sein, um eine ausreichende Nitrifikation zu erzielen.

Vorzugsweise wird das Verhältnis zwischen $BSB_5$ und Gesamtstickstoff in der Stufe (1) auf < 3,5 eingestellt.

In der Stufe (1) verwendet man vorzugsweise eine Lösung von Al-, Fe(III)-, Ca- und/oder Mg-Salzen, insbesondere von Chloriden, die gegebenenfalls auch kolloidale Kieselsäure enthält. Die kolloidale Kieselsäure bewirkt eine adsorptive Bindung von Schadstoffen, wie Schwermetallen, Phenolen und Chlorkohlenwasserstoffen. Die Klärwirkung sowie die Entfernung von Schwermetallen, Phenolen, Chlorkohlenwasserstoffen und anderen Schadstoffen in der Stufe (1) kann noch dadurch verbessert werden, daß man vor der Zugabe der Lösung der Salze der mehrwertigen Metalle anorganische oder organische Ionenaustauscher, die zum Kationenaustausch befähigt sind, zusetzt. Darunter fallen insbesondere Aluminiumsilikate, wie natürliche und alkalisch aktivierte Bentonite, deren Hauptmineral der Montmorillonit ist. Weitere geeignete Aluminiumsilikate, die wie der Montmorillonit zum Strukturtyp der Dreischichtminerale gehören, sind z.B. Pyrophyllit, Beidellit, Vermiculit, Illit, Hectorit und Glauconit. Die genannten Aluminiumsilikate sind insbesondere in der Lage, Schwermetallionen, daneben auch andere Schadstoffe, zu binden.

Organische Ionenaustauscher sind z.B. Polyacrylamide und Polyacrylnitrile. Hochmolekulare Polyampholyte mit funktionellen Amidoxim- und Hydroxamgruppen bzw. sauren, basischen, hydrophilen und hydrophoben Gruppen (z.B. die unter den Handelsnamen GoPur 2000 und 3000 von der Firma HeGo Biotec GmbH vertriebenen Produkte) sind ebenfalls geeignet.

Als Alternative zu bzw. zusammen mit den anorganischen oder organischen Ionenaustauschern können, insbesondere zur Entfernung von Phenolen und Chlorkohlenwasserstoffen Adsorptionsmittel oder Adsorptionsmittelgemische verwendet werden, z.B. ein Adsorptionsmittelgemisch, das säureaktivierte Tonminerale, Braunkohlestaub, Aluminium- und/ oder Eisen-(III)-Salze, $CaCO_3$ und $Ca(OH)_2$ enthält.

Der bei der Vorklärung in Stufe (1) anfallende Klärschlamm wird in an sich bekannter Weise abgetrennt und in Abhängigkeit von seinem Schadstoffgehalt entweder in an sich bekannter Weise entsorgt oder landwirtschaftlich genutzt. Der Klärschlamm kann vorher in einem Faulturm unter Bildung von Biogas ausgefault werden.

In der Stufe (2) wird eine biologische Phosphatfreisetzung durchgeführt. Das im Rücklaufschlamm gespeicherte Phosphat wird entweder in einem anaeroben Bereich des ersten Teils des zweiteiligen Belebungsbeckens, in einem gesonderten anaeroben Zwischenbecken oder im anaeroben Bereich des Vorklärbeckens, als biologisch verfügbares Phosphat freigesetzt. Das biologisch verfügbare Phosphat wird in den folgenden aeroben Stufen wieder gebunden und mit dem Belebtschlamm ausgetragen. Da dieser Belebtschlamm weniger Schadstoffe, insbesondere weniger Schwermetalle, enthält, ist der erhaltene Überschußschlamm wegen seines Phosphatgehalts für die landwirtschaftliche Nutzung gut geeignet.

Die biologische Phosphatfreisetzung in Stufe (2) beruht auf der Speichermöglichkeit von Orthophosphat als Polyphosphat in Zellen einiger Aerobier im aeroben Bereich und auf der Freisetzung unter Energiegewinn im anaeroben Bereich. Die gewonnene Energie wird zur Speicherung von Nährstoffen (kurzkettige organische Moleküle) genutzt.

In der Stufe (3) wird eine Mischung aus Abwasser aus Stufe (2) und Nitrathaltigem Rücklaufwasser in ein besonders gestaltetes Belebungsbecken eingeführt. Man arbeitet mit einem zweiteiligen Belebungsbecken mit einer Trennwand, die in Richtung des Abwasserstroms verläuft und die das Becken in zwei Teile trennt. Der erste Teil des Beckens enthält einen anaeroben Bereich für die vermehrte biologische Phosphatentfernung, einen anoxischen Bereich für die Denitrifikation und einen aeroben Bereich für die Nitrifikation und den Abbau der organischen Fracht. Das Abwasser aus dem Vorklärbecken fließt zunächst in den anaeroben Bereich des Belebungsbeckens, der von dem Zuflußende des Belebungsbeckens am weitesten entfernt ist. Dies wird zweckmäßig mit Hilfe einer Dükerleitung erreicht, die den aeroben und den anoxischen Bereich des ersten Teils des Belebungsbeckens überbrückt und die am Ende des anaeroben Bereichs mündet. Die biologische Phosphatfreisetzung wird in diesem Bereich durchgeführt. Das nitrathaltige Rücklaufwasser (dessen Gewinnung nachstehend erläutert ist) wird durch eine Öffnung in der Trennwand zwischen den beiden Teilen des Belebungsbeckens direkt aus den zweiten aeroben Teil des Belebungsbeckens in den anoxischen Bereich im ersten Teil des Belebungsbeckens gepumpt und dort einer Denitrifikation unterzogen. Auf diese Weise kann der Transportweg des nitrathaltigen Rücklaufwassers stark verkürzt und der Platz- und Energiebedarf deutlich vermindert werden, wodurch die mit den langen Pumpleitungen der Abwasseranlagen nach dem Stand der Technik verbundenen Schwierigkeiten ausgeschaltet werden können. Es sei darauf hingewiesen, daß das nitrathaltige Rücklaufwasser eine gewisse Schlammfracht enthält, da die Fest-Flüssig-Trennung in einer dem Belebungsbecken nachgeschalteten Einrichtung erfolgt. Die Hauptmenge des belebten Rücklaufschlamms aus der Fest-Flüssig-Trenneinrichtung, z.B. einem Nachklärbecken oder einer Flotationseinrichtung wird in den anaeroben Bereich des ersten Teils des Belebungsbeckens zurückgeführt, und der Überschußschlamm wird abgezogen.

Nachdem die Mischung aus dem Abwasser aus Stufe (2), dem belebten Rücklaufschlamm und dem nitrathaltigen Rücklaufwasser im anoxischen Bereich denitrifiziert worden ist, gelangt sie in der Stufe (4) in einen getrennten aeroben Bereich im ersten Teils des Belebungsbeckens, wo sie unter intensiver Belüftung einer Nitrifikation unterzogen wird.

Die nitrathaltige Schlamm-Abwasser-Mischung wird dann in Stufe (5) unmittelbar in dem zweiten, aeroben Teil des Belebungsbeckens geleitet, und zwar zweckmäßig durch eine Öffnung am unteren Teil der Trennwand. Im zweiten, aeroben Teil des Belebungsbeckens werden die Nitrifikation sowie der Abbau der organischen Fracht weitergeführt.

Dann wird in Stufe (6) ein größerer Teil des erhaltenen nitrathaltigen Abwassers durch die bereits genannte Öffnung in der Trennwand zwischen den beiden Teilen des Belebungsbeckens als Rücklaufwasser in den anoxischen Bereich des ersten Teils des Belebungsbeckens zurückgepumpt. Die Öffnung befindet sich in der unteren Hälfte der Trennwand, um eine möglichst vollständige Durchmischung von nitrathaltigem und nicht-nitrifiziertem Abwasser zu erzielen.

Die Menge des Rücklaufwassers beträgt vorzugsweise 300 bis 400 % des aus dem zweiten Teil des Belebungsbeckens abgeleiteten Abwassers.

Der kleinere Teil des Abwassers wird also zusammen mit dem Hauptteil des Belebtschlamms in eine Fest-Flüssig-Trenneinrichtung geleitet, z.B. in ein Nachklärbecken, eine Flotationseinrichtung, eine Zentrifugier- oder Filtereinrichtung.

In der Stufe (7) wird dann in den Zulauf der Fest-Flüssig-Trenneinrichtung eine Lösung von Salzen mehrwertiger Metalle zur Phosphatfällung eingespeist. Diese Lösung kann die gleiche sein, wie sie in die Stufe (1) eingespeist wird. Dadurch können die geforderten Phosphatablaufwerte gesichert eingehalten werden. Ferner können dem Zulauf zum Nachklärbecken auch die im Zusammenhang mit Stufe (1) genannten Aluminiumsilikate, die zum Kationenaustausch befähigt sind, zugesetzt werden.

Der ausgeflockte Schlamm wird nun vom geklärten Abwasser abgetrennt. Da er aufgrund der chemisch-physikalischen Vorbehandlung weniger Schadstoffe enthält als der bei der Vorklärung in Stufe (1) anfallende Schlamm, ist er besonders gut für eine landwirtschaftliche Nutzung geeignet.

Eine besonders gute Kontrolle des Reinigungsprozesses kann dadurch erzielt werden, daß man zwischen dem anaeroben und dem anoxischen Bereich und gegebenenfalls auch zwischen dem anoxischen und dem aeroben Bereich des ersten Teils des Belebungsbeckens jeweils eine Tauchwand vorsieht und die Schlamm-Abwasser-Mischung unter der Tauchwand bzw. den Tauchwänden hindurchführt. Auf diese Weise wird eine schärfere Trennung der einzelnen Bereiche erzielt. So kann z.B. weitgehend vermieden werden, daß die in den aeroben Bereich eingeführte Luft in den anoxischen Bereich gelangt und dort den Denitrifizierungsprozeß stört. Weiterhin kann auf diese Weise die Mischung in jedem Bereich unterschiedlich stark gerührt oder anderweitig bewegt werden, so daß die Denitrifikation und die Nitrifikation sowie gegebenenfalls auch die Phosphatfreisetzung unter optimalen Bedingungen ablaufen können.

Das erfindungsgemäße Verfahren ist nachstehend anhand der Zeichnung erläutert. Es zeigen:

Fig. 1   eine schematische Darstellung des erfindungsgemäßen Abwasser-Reinigungsverfahrens mit biologischer Phosphatfreisetzung im anaeroben Bereich des ersten Teils des Belebungsbeckens und Belebtschlamm-Rückführung;

Fig. 2 eine Variante des erfindungsgemäßen Abwasser-Reinigungsverfahrens mit biologischer Phosphatfreisetzung in einem anaeroben Zwischenbecken mit Belebtschlamm-Rückführung.

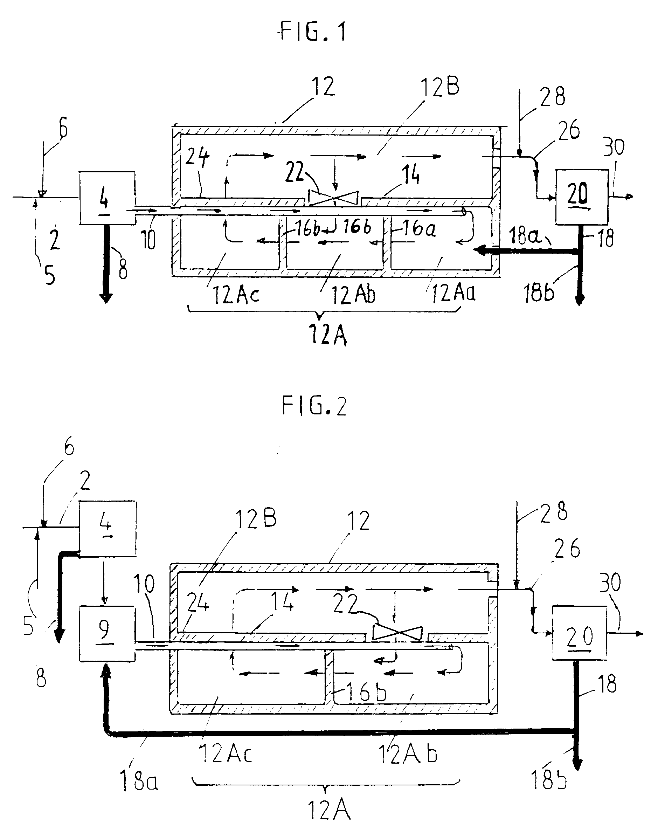

Bei der Ausführungsform nach Fig. 1 strömt das Abwasser durch die Leitung 2 in das Vorklärbecken 4. Falls die Abwasserfracht Schwermetalle, Phenole, Chlorkohlenwasserstoffe oder andere Schadstoffe enthält, kann durch die Leitung 5 eine Suspension eines Aluminiumsilikats mit einem hohen Ionenumtauschvermögen (z.B. alkalisch aktivierter Bentonit) und/oder ein Gemisch aus Adsorptionsmitteln und Ionenaustauschern (z.B. ein Gemisch aus säureaktiviertem Bentonit, Braunkohlestaub, Kieselgel und Säurepuffern wie $CaCO_3$ und/oder $Ca(OH)_2$) zugesetzt werden. Durch die Leitung 6 wird eine Lösung von Salzen mehrwertiger Metalle in die Leitung 2 eingespeist. Das verwendete Abwasser hatte einen $BSB_5$-Wert von 400 mg $O_2$/l, einen Gesamtstickstoffgehalt von 50 mg/l und einen Gesamtphosphorgehalt von 10 mg/l. Das verwendete Abwasser hatte einen verhältnismäßig niedrigen Gehalt an Schwermetallen und anderen Schadstoffen, so daß die Zudosierung der weiteren Zusatzstoffe durch die Leitung 5 nicht notwendig war. Die Durchsatzmenge betrug 10 000 m³/Tag. Das Verhältnis $BSB_5$ : N betrug etwa 8.

Unter der Wirkung der Lösung der Salze mehrwertiger Metalle wird im Vorklärbecken 4 ein Klärschlamm gebildet, der durch die Leitung 8 abgezogen wird. Die Schlammleitungen sind bei dieser und den folgenden Ausführungsformen immer dick gezeichnet. Beim Verlassen des Vorklärbeckens 4 hatte das Abwasser einen $BSB_5$-Wert von 200 mg $O_2$/l und ein $BSB_5$ : N-Verhältnis von etwa 4,5. Der Gesamtstickstoff betrug etwa 45 mg/l, der Gesamtphosphor etwa 8 mg/l.

Das vorgeklärte Abwasser wird über eine Dükerleitung 10 bis in den hinteren anaeroben Bereich 12Aa des ersten Teils 12A des Belebungsbeckens 12 geleitet. Die Teile 12A und 12B sind durch eine Trennwand 14 voneinander getrennt. Die Bereich 12Aa, 12Ab und 12Ac sind durch die Tauchwände 16a und 16b voneinander getrennt.

Das aus der Dükerleitung 10 in den anaeroben Bereich 12Aa austretende Abwasser vermischt sich mit dem Belebtschlamm aus der Leitung 18a, die aus der Fest-Flüssig-Trenneinrichtung 20 führt.

Die Mischung aus vorgereinigtem Abwasser und Belebtschlamm strömt unterhalb der Tauchwand 16a in den anoxischen Bereich 12Ab und wird dort mit nitrathaltigem Rücklaufwasser vermischt, das mit Hilfe der Pumpe 22 durch eine Öffnung in der Trennwand 14 gepumpt wird. Die Öffnung befindet sich in der unteren Hälfte der Trennwand 14. Die Menge des Rücklaufwassers beträgt etwa 300 bis 400 % des aus dem zweiten Teil 12B des Belebungsbeckens 12 abgeleiteten Abwassers.

Im anoxischen Bereich 12Ab erfolgt die Denitrifizierung des nitrathaltigen Abwassers unter Freisetzung von molekularem Stickstoff, wobei der Nährstoffbedarf der Denitrifikanten durch das zulaufende Abwasser und den Rücklaufschlamm gedeckt wird.

Die denitrifizierte Schlamm-Abwasser-Mischung strömt dann unterhalb der Trennwand 16b in den aeroben Bereich 12Ac, in welchem die Nitrifikation sowie ein Abbau der organischen Fracht stattfindet. Der Nährstoffbedarf der Nitrifikanten wird ebenfalls durch das zulaufende Abwasser sowie durch den Rücklaufschlamm gedeckt.

Die nitrathaltige Schlamm-Abwasser-Mischung wird dann über eine Öffnung 24 im unteren Teil der Trennwand 14 unmittelbar in den zweiten, aeroben Teil 12B des Belebungsbeckens 12 geleitet, in welchem die Nitrifikation und der Abbau der organischen Fracht weitergeführt werden.

Dann wird, wie bereits gesagt, ein größerer Teil des nitrathaltigen Abwassers zusammen mit Belebtschlamm mit Hilfe der Pumpe 22 durch eine Öffnung 24 in der Trennwand 14 in den anoxischen Bereich 12Ab zurückgepumpt. Ein kleinerer Teil des Abwassers (1/4 bis 1/3) wird zusammen mit dem Belebtschlamm durch die Leitung 26 in die Fest-Flüssig-Trenneinrichtung 20 geleitet. In die Leitung 26 wird aus der Leitung 28 eine Lösung von Salzen mehrwertiger Metalle eingespeist, wodurch die Ausflockung des Schlammes in der Fest-Flüssig-Trenneinrichtung 20 gefördert und die Einhaltung der Phosphatgrenzwerte durch Ausfällung der Phosphate gewährleistet wird. Der Schlamm und die ausgefällten Phosphate werden durch die Leitung 18 abgezogen. Ein Teil davon wird durch die Leitung 18a in den anaeroben Bereich 12Aa zurückgepumpt. Der andere Teil des Schlamms wird durch die Leitung 18b abgezogen und kann in der üblichen Weise aufbereitet und landwirtschaftlich genutzt werden.

Das geklärte Abwasser verläßt die Fest-Flüssig-Trenneinrichtung 20 über die Leitung 30 zum Vorfluter.

Bei der Ausführungsform nach Fig. 2 strömt ein mit Schwermetallen (Zn, Cr, Pb, Cu, Ni, Cd, Hg) belastetes Abwasser mit einem $BSB_5$-Wert von 250 mg $O_2$/l, einem Gesamtstickstoffgehalt von 150 mg/l und einem Gesamtphosphorgehalt von 7 mg/l wie bei der Ausführungsform nach Fig. 1 durch das Vorklärbecken 4, wobei durch die Leitung 5 eine Suspension von alkalisch aktiviertem Bentonit und durch die Leitung 6 eine Lösung von Salzen mehrwertiger Metalle in die Leitung 2 eingespeist werden. Der im Vorklärbecken 4 gebildete schwermetallhaltige Klärschlamm wird durch die Leitung 8 abgezogen und deponiert. Das vorgeklärte Abwasser, dessen Schwermetallgehalt etwa 20 % des Ausgangswertes, dessen $BSB_5$-Wert 150 mg $O_2$/l, dessen Gesamtstickstoff 35 mg/l und dessen Gesamtphosphor 6 mg/l betrugen, wurde in einem anaeroben Zwischenbecken 9 mit Belebtschlamm aus der Fest-Flüssig-Trenneinrichtung 20, der über die Leitung 18a zugeführt wurde, vermischt. Im anaeroben Zwischenbecken 9 findet eine biologische Phosphatfreisetzung statt. Das anaerobe Zwischenbecken kann auch in dem Vorklärbecken 4 integriert sein, wobei im Vorklärbecken 4 z.B. eine Tauchwand vorgesehen sein kann. Es ist lediglich darauf zu achten, daß der durch die Leitung 8 abgezogene Klärschlamm nicht mit dem durch die Leitung 18a zugeführten Belebtschlamm vermischt wird. Die Mischung aus belebtem Rücklaufschlamm und vorgeklärtem Abwasser wurde über die Dükerleitung 10 bis in den hinteren anoxischen Bereich 12Aa des ersten Teils 12A des Belebungsbeckens 12 geleitet. Die Teile 12A und 12B sind wiederum durch eine Trennwand 14 voneinander getrennt. Der anoxische Bereich 12Ab ist durch die Tauchwand 16b vom aeroben Bereich 12Ac getrennt.

Die aus der Dükerleitung 10 in den anoxischen Bereich 12Ab austretende Mischung aus vorgereinigtem Abwasser und Rücklaufschlamm wird mit nitrathaltigem Rücklaufwasser vermischt, das mit Hilfe der Pumpe 22 durch eine Öffnung in der Trennwand 14 gepumpt wird. Die Menge des Rücklaufwassers beträgt wiederum etwa 300 bis 400 % des aus dem zweiten Teil 12B des Belebungsbeckens 12 abgeleiteten Abwassers.

Im anoxischen Bereich 12Ab erfolgt wiederum die Denitrifizierung des nitrathaltigen Abwassers unter Freisetzung von molekularem Stickstoff.

Die denitrifizierte Schlamm-Abwasser-Mischung strömt dann unterhalb der Trennwand 16b in den aeroben Bereich 12Ac, in welchem die Nitrifikation sowie der Abbau der organischen Fracht stattfinden.

Die nitrathaltige Schlamm-Abwasser-Mischung wird dann über eine Öffnung 24 im unteren Teil der Trennwand unmittelbar in den zweiten, aeroben Teil 12B des Belebungsbeckens 12 geleitet, in welchem die Nitrifikation und der Abbau der organischen Fracht weitergeführt werden. Dann wird wie bei der Ausführungsform nach Fig. 1 ein größerer Teil des nitrathaltigen Abwassers zusammen mit Belebtschlamm mit Hilfe der Pumpe 22 durch die Öffnung 24 in der Trennwand 14 in den anoxischen Bereich 12Ab zurückgepumpt. Ein kleinerer Teil des Abwassers wird zusammen mit dem Belebtschlamm durch die Leitung 26 in die Fest-Flüssig-Trenneinrichtung 20 geleitet, die wie bei der Ausführungsform nach Fig. 1 mit einer Zulaufleitung 28 für die Lösung von Salzen mehrwertiger Metalle, der Schlamm-Abzugsleitung 18 und der Abwasserleitung 30 ausgestaltet ist. Der Überschußschlamm aus der Leitung 18b kann aufgrund der Behandlung in der Vorklärstufe landwirtschaftlich genutzt werden.

## Patentansprüche

1. Verfahren zur Reinigung von Phosphate und Stickstoffverbindungen enthaltenden Abwässern, wobei man

    (1) das Abwasser in einem Vorklärbecken durch Zugabe einer Lösung von Salzen mehrwertiger Metalle zunächst chemisch vorklärt, bis das Verhältnis zwischen biologischem Sauerstoffbedarf ($BSB_5$) und Gesamtstickstoff weniger als 4,5 beträgt;

    (2) das vorgeklärte Abwasser in einem anaeroben Bereich des ersten Teils eines zweiteiligen Belebungsbeckens, in einem anaeroben Zwischenbecken oder in einem anaeroben Bereich des Vorklärbeckens zusammen mit belebtem Rücklaufschlamm aus einer Fest-Flüssig Trenneinrichtung, einer biologischen Phosphatfreisetzung unterzieht;

    (3) eine Mischung aus dem aus Stufe (2) erhaltenen Abwasser und nitrathaltigem Rücklaufwasser mit Belebtschlamm, die durch eine Öffnung in der Trennwand zwischen den beiden Teilen des Belebungsbeckens direkt aus dem zweiten aeroben Teil des Belebungsbeckens gepumpt werden, in einem an den anaeroben Bereich anschließenden anoxischen Bereich des Belebungsbeckens einer Denitrifikation unterzieht;

    (4) die denitrifizierte Schlamm-Abwasser-Mischung in einem getrennten aeroben Bereich im erster, Teil des Belebungsbeckens einer Nitrifikation und dem Abbau der organischen Fracht unterzieht;

    (5) die nitrathaltige Schlamm-Abwasser-Mischung unmittelbar in den zweiten, aeroben Teil des Belebungsbeckens leitet und dort die Nitrifikation und den Abbau der organischen Fracht weiterführt;

    (6) einen größeren Teil des erhaltenen nitrathaltigen Abwassers mit Belebtschlamm durch eine Öffnung in der Trennwand zwischen den beiden Teilen des Belebungsbeckens als Rücklaufwasser in den anoxischen Bereich des ersten Belebungsbeckens zurückpumpt und einen kleineren Teil des Abwassers zusammen mit Belebtschlamm in eine Fest-Flüssig-Trenneinrichtung leitet; und

(7) in den Zulauf der Fest-Flüssig-Trenneinrichtung eine Lösung von Salzen mehrwertiger Metalle zur Phosphatfällung einspeist und den ausgeflockten Schlamm von geklärten Abwasser abtrennt.

2. Verfahren nach Anspruch 1, dadurch gekennzeichnet, daß man das Verhältis zwischen $BSB_5$ und Gesamtstickstoff in der Stufe (1) auf weniger als 3,5 einstellt.

3. Verfahren nach Anspruch 1 oder 2, dadurch gekennzeichnet, daß man in der Stufe (1) eine Lösung von Al-, Fe(III)-, Ca- und/oder Mg-Salzen, insbesondere von Chloriden, verwendet, die gegebenenfalls auch kolloidale Kieselsäure enthält.

4. Verfahren nach einem der Ansprüche 1 bis 3, dadurch gekennzeichnet, daß man zur Entfernung von Schwermetallen, Phenolen, Chlorkohlenwasserstoffen und anderen Schadstoffen vor der Zugabe der Lösung der Salze von mehrwertigen Metallen in der Stufe (1) anorganische oder organische Ionenaustauscher, die zum Kationenaustausch befähigt sind und/oder ein Adsorptionsmittelgemisch, das säureaktivierte Tonminerale, Salze mehrwertiger Metalle, Braunkohlestaub und Säurepuffer wie $CaCO_3$ und/oder $Ca(OH)_2$ enthält, zusetzt.

5. Verfahren nach einem der Ansprüche 1 bis 4, dadurch gekennzeichnet, daß man den bei der Vorklärung in Stufe (1) anfallenden Klärschlamm in an sich bekannter Weise abtrennt und in Abhängigkeit von seinem Schadstoffgehalt entweder in an sich bekannter Weise entsorgt oder landwirtschaftlich nutzt.

6. Verfahren nach einem der Ansprüche 1 bis 5, dadurch gekennzeichnet, daß man zwischen dem anaeroben und dem anoxischen Bereich und gegebenenfalls auch zwischen dem anoxischen und dem aeroben Bereich des ersten Teils des Belebungsbeckens jeweils eine Tauchwand vorsieht und die Schlamm-Abwasser-Mischung unter der Tauchwand bzw. den Tauchwänden hindurchführt.

**Claims**

1. A method of purifying waste water containing phosphates and nitrogen compounds, wherein

(1) the waste water is initially preclarified chemically in a primary settling tank by adding a solution of salts of polyvalent metals until the ratio between biological oxygen demand ($BOD_5$) and total nitrogen is less than 4.5;

(2) the preclarified waste water is subjected to a biological phosphate release in an anaerobic region of the first part of a two-part aeration tank, in an anaerobic intermediate tank or in anaerobic region of the primary settling tank together with return activated sludge from a solid-liquid separator;

(3) a mixture of the waste water obtained from stage (2) and nitrate-containing return water with activated sludge, which are pumped through an opening in the separating wall between the two parts of the aeration tank directly from the second aerobic part of the aeration tank, is subjected to denitrification in an anoxic region of the aeration tank adjoining the anaerobic region;

(4) the denitrified sludge-waste water mixture is subjected to denitrification and decomposition of the organic load in a separate aerobic region in the first part of the aeration tank;

(5) the nitrate-containing sludge-waste water mixture is conveyed directly into the second aerobic part of the aeration tank and the nitrification and decomposition of the organic load is continued therein;

(6) a major portion of the resultant nitrate-containing waste water is pumped back with activated sludge through an opening in the separating wall between the two parts of the aeration tank as return water into anoxic region of the first aeration tank and a minor portion of the waste water is directed into a solid-liquid separator together with activated sludge, and

(7) a solution of salts of polyvalent metals is fed into the inflow of the solid-liquid separator for phosphate precipitation and the flocculated sludge is separated from clarified waste water.

2. A method according to Claim 1, characterized in that the ratio between $BOD_5$ and total nitrogen in stage (1) is adjusted to less than 3.5.

3. A method according to Claim 1 or 2, characterized in that a solution of Al, Fe(III), Ca and/or Mg salts, in particular of chlorides, is used in stage (1), which optionally also contains colloidal silicic acid.

4. A method according to any one of Claims 1 to 3, characterized in that to remove heavy metals, phenols, chlorinated hydrocarbons and other pollutants, prior to the addition of the solution of salts of polyvalent metals in stage (1), inorganic or organic ion exchangers, which are capable of effecting cation exchange, and/or an adsorption agent mixture, which contains acid-activated clay minerals, salts of polyvalent metals, pulverised brown coal and acid buffers, such as $CaCO_3$ and/or $Ca(OH)_2$, are added.

5. A method according to any one of Claims 1 to 4, characterized in that the clarified sludge occurring during the preclarifying in stage (1) is separated in per se known manner and, depending on its pollutant content, is either disposed of in per se known manner or is utilized agriculturally.

6. A method according to any one of Claims 1 to 5, characterized in that a respective baffle is provided between the anaerobic and anoxic region and, optionally, also between the anoxic region and the aerobic region of the first part of the aeration tank, and the sludge-waste water mixture passes under the baffle or baffles.

**Revendications**

1. Procédé d'épuration d'eaux usées contenant des phosphates et des composés azotés, caractérisé en ce que

(1) les eaux usées sont d'abord soumises à une épuration préalable chimique par l'ajout d'une solution de sels de métaux à plusieurs valences, jusqu'à ce que le rapport entre le besoin biologique en oxygène ($BBO_5$) et l'azote total soit inférieur à 4,5 ;

(2) les eaux usées préclarifiées sont soumises à une libération biologique des phosphates dans un secteur anaérobie de la première partie d'un bassin d'activation en deux parties, dans un bassin intermédiaire anaérobie ou dans un secteur anaérobie du premier bassin de décantation avec de la boue de recyclage activée provenant d'une installation de séparation solide-liquide ;

(3) un mélange des eaux usées obtenues dans l'étape (2) et d'eau recyclée contenant des nitrates avec de la boue activée, qui est directement pompée hors de la seconde partie anaérobie du bassin d'activation à travers une ouverture dans la cloison entre les deux parties du bassin d'activation, est soumis à une dénitrification dans un secteur anoxique du bassin d'activation suivant le secteur anaérobie ;

(4) le mélange de boue et d'eaux usées dénitrifiées est soumis à une nitrification et à une décomposition de la charge organique dans un secteur aérobie séparé dans la première partie du bassin d'activation ;

(5) le mélange de boue et d'eaux usées dénitrifiées est directement acheminé dans la deuxième partie aérobie du bassin d'activation et la nitrification et la décomposition de la charge organique y sont poursuivies ;

(6) une grande partie des eaux usées contenant des nitrates obtenues est renvoyée avec de la boue activée, à travers une ouverture dans la cloison entre les deux parties du bassin d'activation, dans le secteur anoxique du premier bassin d'activation sous la forme d'eau de recyclage, et une petite partie des eaux usées est acheminée avec de la boue activée dans une installation de séparation solide-liquide ; et

(7) une solution de sels de métaux à plusieurs valences est ajoutée à l'entrée de i'installation de séparation solide-liquide pour précipiter les phosphates et la boue floculée est séparée des eaux usées épurées.

2. Procédé selon la revendication 1, caractérisé en ce que le rapport entre le $BBO_5$ et l'azote total est fixé dans l'étape (1) à une valeur inférieure à 3,5.

3. Procédé selon la revendication 1 ou 2, caractérisé en ce qu'une solution de sels d'Al, Fe(III), Ca et/ou Mg, en particulier de chlorures, qui contient éventuellement aussi de l'acide silicique colloïdal, est utilisée dans l'étape (1).

4. Procédé selon l'une des revendications 1 à 3, caractérisé en ce que l'on utilise pour l'élimination des métaux lourds, des phénols, des hydrocarbures chlorés et des autres polluants, avant l'ajout de la solution de sels de métaux à plusieurs valences dans l'étape (1), des échangeurs d'ions anorgoniques ou organiques capables de réaliser un échange de cations et/ou un mélange d'agents d'adsorption contenant des minéraux argileux activés par un acide, des sels de métaux a plusieurs valences, du poussier de lignite et des tampons acides tels que du $CaCO_3$ et du $Ca(OH)_2$.

5. Procédé selon l'une des revendications 1 à 4, caractérisé en ce que la boue de décantation obtenue lors de l'épuration, préalable de l'étape (1) est séparée et éliminée de manière connue ou utilisée dans l'agriculture en fonction de sa teneur en polluants.

6. Procédé selon l'une des revendications 1 à 5, caractérisé en ce qu'il est prévu entre les secteurs anaérobie et anoxique et éventuellement aussi entre les secteurs anoxique et aérobie de la première partie du bassin d'activation une paroi plongeuse et le mélange de boues et d'eaux usées passe en-dessous de la paroi plongeuse ou des parois plongeuses.

EP 0 497 114 B1

FIG. 1

FIG.2

11